# EUROPÄISCHE PATENTSCHRIFT

(11) **EP 2 792 446 B1**
(45) Veröffentlichungstag und Bekanntmachung des Hinweises auf die Patenterteilung: **01.07.2015**
(21) Anmeldenummer: 13164329.8
(22) Anmeldetag: 18.04.2013
(51) Int. Cl.: B23K 20/12

(54) **Hohlprofilverbindung unter Anwendung des Reibrührschweissens**
Hollow profile connection using friction stir welding
Liaison à profil creux utilisant le procédé de soudage par friction-malaxage

(43) Veröffentlichungstag der Anmeldung: 22.10.2014
(73) Patentinhaber: Magna Steyr Fahrzeugtechnik AG & Co KG, 8041 Graz (AT)
(72) Erfinder: Hofer Bernhard, 8053 Graz (AT); Zachnegger Harald, 8041 Graz (AT)
(74) Vertreter: Zangger, Bernd

(56) Entgegenhaltungen:
- DE-A1- 10 011 593
- JP-A- H11 226 759
- JP-A- 2001 233 208

## Beschreibung

Die vorliegende Erfindung betrifft eine Hohlprofilverbindung der Art, wie sie in Anspruch 1 wiedergegeben ist.

### Stand der Technik

Die Verbindung von metallischen Hohlprofilen erfolgt häufig und effektiv mittels Knotenblechen, welche zwischen den Profilen angeordnet und anschließend durch Verschweißungen mit diesen verbunden werden. Im Kraftfahrzeugbau werden aus Gewichtsgründen meist Hohlprofile aus Aluminium verwendet, die Knotenbleche sind ebenfalls aus Aluminium gefertigt.

Bei der Ausführung der üblichen Verschweißungen kommt es zu einem hohen Wärmeeintrag, der einen Verzug des Zusammenbaues verursacht. Die Maßhaltigkeit wird negativ beeinflusst. Um flächige und somit stabile Verbindungen herzustellen, müssen Löcher in die Bleche eingebracht werden, um Lochschweißungen auszuführen. Beim Schweißen kommt es ferner zu Schweißspritzern, die von den Flächen aufwändig entfernt werden müssen.

Mittels Reibrührschweißen, dem indirekten Reibrührschweißen lassen sich Bleche aus Aluminium bei niedrigem Wärmeeintrag miteinander verbinden. Die Bleche werden übereinander gelegt und das Reibrührschweißwerkzeug wird auf die Oberseite des einen Bleches mit Druck aufgesetzt und entlang einer vorgesehenen Verbindungslinie verfahren. Es ergibt sich eine Verbindung. Eine Anwendung bei Hohlprofilen ist jedoch nicht möglich.

Die DE 10 2010 018 504 A1 beschreibt ein Herstellverfahren eines Hohlprofils unter Anwendung des Reibrührschweißens. Ein Halbzeug aus einer Aluminiumlegierung wird entlang einer Verbindungslinie mittels einer durch Reibrührschweißen ausgeführten Schweißverbindung verschweißt. Während des Schweißens wird ein Gegenhalter in das Profil eingeführt, der die Schweißzone von der Unterseite her stützt.

Das Verschweißen von zwei in einer Ebene liegenden Blechen entlang deren Kontaktlinie mittels Reibrührschweißen beschreibt die DE 10 2010 003 742 A1.

Die Verbindung zweier in einer Ebene aneinander angrenzender Bleche auf einem Hohlprofil zeigt die JP 2004261859 A. Mittels eines Werkzeuges werden die Bleche entlang der einen Spalt bildenden Grenze durch Reibrührschweißen miteinander verschweißt - gleichzeitig wird noch ein Metallstreifen in den Spalt eingelegt.

Die Herstellung eines Hohlprofilteiles unter Zusammenfügung von zwei Formteilen sowie der Verbindung der Formteile mittels Reibrührschweißen entlang der Fügelinie zeigt die JP2001233208 A.

Ein Verfahren zur Herstellung einer verwindungsarmen Rahmenstruktur in Überlappschweißung zeigt die DE 100 11 593 A1. Hier dient als Verbindungselement für drei Rohre ein T-förmiges Knotenstück, welches in die zu verbindenden Rohrenden eingesteckt wird. Der das eingeführte Knotenstück überlappende Rohrendbereich wird mittels eines umlaufenden Werkzeuges reibrührverschweißt, so dass sich das Rohrmaterial mit dem Material des Knotenstückes im Sinne einer Reibrührverschweißung verbinden kann.

Die Verbindung von Profilteilen mittels Reibrührschweißen beschreibt auch die JP11226759 A. Die miteinander zu verbindenden Teile werden zueinander ausgerichtet, ein die beim Reibrührschweißen auftretenden Druckkräfte aufnehmendes Druckstück im Kontaktbereich der Teile wird mit verschweißt.

### Zusammenfassung der Erfindung

Es ist eine Aufgabe der Erfindung, eine Hohlprofilverbindung in gegenüber den bekannten Arten verbesserter Ausführung vorzuschlagen.

Die Lösung der Aufgabe erfolgt durch die Merkmale von Anspruch 1. Weiterbildungen ergeben sich aus den Unteransprüchen.

Erfindungsgemäß ist zur Verbindung von wenigstens zwei Hohlprofilen ein Knotenteil vorgesehen, dessen Endstücke in die Enden der Hohlprofile einsteckbar sind, wobei die den Hohlprofilenden zugeordneten Endstücke des Knotenteils ein durch Stege, Rippen gebildetes Profil aufweisen und wobei Knotenteil und Hohlprofilteil durch eine Reibrührschweißverbindung miteinander verbunden sind. Die durch Reibrührschweißen erzeugten Verbindungen zwischen Hohlprofil und Knotenteil verlaufen entlang der Rippen, Stege, also in Erstreckungsrichtung des jeweiligen Hohlprofils genau in dem Bereich, der durch den Steg, die Rippe des Knotenteils entsprechend druckfest unterstützt ist. Die durch Reibrührschweißen erzeugten Verbindungen können punktuell und/oder kontinuierlich und/oder linienförmig ausgeführt sein.

Die in die Hohlprofile eingeführten profilierten Teile des Knotenteils sind vorzugsweise als X-, Stern- oder H-förmige Struktur ausgebildet, wobei deren Außenbemaßung an die Innenkontur des Hohlprofils angepasst ist. Die in vorgesehener Anzahl im Wesentlichen radial nach außen ragenden Stege, Rippen weisen nach dem Einführen in das Hohlprofil einen Kontakt mit der Innenseite des Hohlprofils auf und vermögen so einen von der Außenseite ausgeübten Druck - beim Erzeugen der Verbindung mittels Reibrührschweißen - aufzunehmen.

Die Hohlprofile sind insbesondere als quadratische, rechteckige oder hexagonale Profile, Profilstäbe ausgebildet, deren dem Knotenteil zugeordneten Enden offen sind.

Gemäß einer Weiterbildung der Erfindung sind die Hohlprofile durch das Knotenteil sowie mittels wenigstens einem von außen angesetztem Knotenblech miteinander verbunden. Das Knotenblech kontaktiert die Hohlprofile an deren Außenseite in einem Bereich, der sich mit der Eintauchtiefe der profilierten Enden des Knotenteils in das jeweilige Hohlprofil überschneidet. So ist es möglich, mittels der entlang der Stege, Rippen des profilierten Knotenteils auszuführenden Verbindungen das Knotenblech das Hohlprofil sowie das Knotenteil miteinander zu verbinden.

Das Knotenblech wird mit dem Hohlprofil und dem eingesetzten profilierten Ende des Knotenteils mittels wenigstens einer Reibrührschweißung verbunden. Die Reibrührschweißung verläuft entlang wenigstens einer der Rippen, Stege, welche im Inneren des Hohlprofil Kontakt mit diesem haben. Bevorzugt werden mehrere Reibrührschweißungen entlang der innen das Hohlprofilteil kontaktierenden Rippen ausgeführt.

Eine bevorzugte Ausführung der Erfindung sieht vor, dass das Knotenblech auch direkt mit dem Knotenteil, den Rippen des Knotenteiles verbunden ist. Es sind somit auch durch Reibrührschweißen erzeugte Verbindungen zwischen Knotenblech und Knotenteil außerhalb der Hohlprofilteile möglich. Dabei kann vorgesehen sein, dass Verbindungen zwischen Knotenblech und Knotenteil entlang sämtlicher Rippen des Knotenteils ausgeführt werden.

Das Knotenteil, welches die wenigstens zwei Hohlprofile miteinander verbindet, kann von zwei Knotenblechen umgeben sein, wobei diese in Form von zwei Halbschalen die Enden der Hohlprofile umfassend zusammengesetzt und sodann verbunden werden. Die Reibrührschweißungen sind dabei im Bereich der Hohlprofilüberlappung entlang der Rippen der eingesetzten profilierten Enden des Knotenteils ausgeführt. Zusätzlich sind auch Reibrührschweißungen im direkten Kontaktbereich der Knotenbleche ausgeführt. Diese weisen bevorzugt ein oder mehrere als Kontakt- und Verbindungsstreifen gestaltete Berieche auf, in denen die der Verbindung dienenden Reibrührschweißungen ausgeführt werden können.

Das erfindungsgemäße Knotenteil kann zur Verbindung von zwei, drei oder mehreren Hohlprofilen dienen. Bei drei Hohlprofilen ist das Knotenteil T-förmig gestaltet.

Weiterhin kann vorgesehen sein, dass die Hohlprofile Einrichtungen aufweisen, welche die Eintauchtiefe des jeweiligen Endstückes des Knotenteils in das Hohlprofil begrenzen. Dies kann insbesondere in das Hohlprofil einsteckbarer Stift oder eine Schraube sein.

Weiterbildungen der Erfindung sind in den abhängigen Ansprüchen, der Beschreibung sowie den beigefügten Zeichnungen angegeben.

### Kurzbeschreibung der Zeichnungen

Die Erfindung wird im Folgenden beispielhaft unter Bezugnahme auf die Zeichnungen beschrieben.
- Fig. 1: die Verbindung von drei Hohlprofilen mittels eines Knotenteils in perspektivischer Darstellung.
- Fig. 2: einen Schnitt durch ein Hohlprofil mit dem eingesetzten profilierten Endstück des Knotenteils sowie den durch Reibrührschweißen ausgeführten Verbindungen.
- Fig. 3: eine Verbindung von drei Hohlprofilen mittels Knotenteil sowie zwei zusätzlichen Knotenblechen in perspektivischer Darstellung.
- Fig. 4: einen Schnitt durch ein Hohlprofil mit eingesetztem profilierten Endstück eines Knotenteils, zwei das Hohlprofil außen umfassenden Knotenblechen sowie den durch Reibrührschweißen ausgeführten Verbindungen.
- Fig. 5: eine Verbindung von drei Hohlprofilen mittels Knotenteil sowie zwei zusätzlichen Knotenblechen in perspektivischer Darstellung - beide Knotenbleche noch nicht an die Hohlprofile, das Knotenteil angesetzt.
- Fig. 6: die direkte Verbindung der Knotenbleche mit den Rippen des Knotenteils.

### Detaillierte Beschreibung der Erfindung

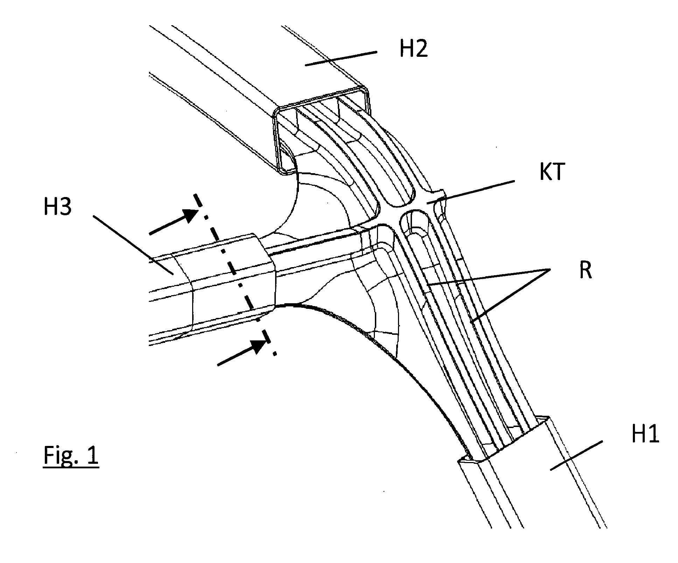

Figur 1 zeigt eine Verbindung von drei Hohlprofilen H1, H2, H3 durch ein in die Enden der Hohlprofile H1, H2, H3 eingesetztes, T-förmiges Knotenteil KT. Das Knotenteil KT ist als ein Gussteil aus Aluminium, einer Aluminiumlegierung gefertigt und weist an seinen Enden den Querschnitten der aufzunehmenden Hohlprofile H1, H2, H3 angepasste, mit Rippen R ausgebildete Profile auf. Die Hohlprofile H1, H2, H3 sind ebenfalls aus Aluminium, einer Aluminiumlegierung gefertigt.

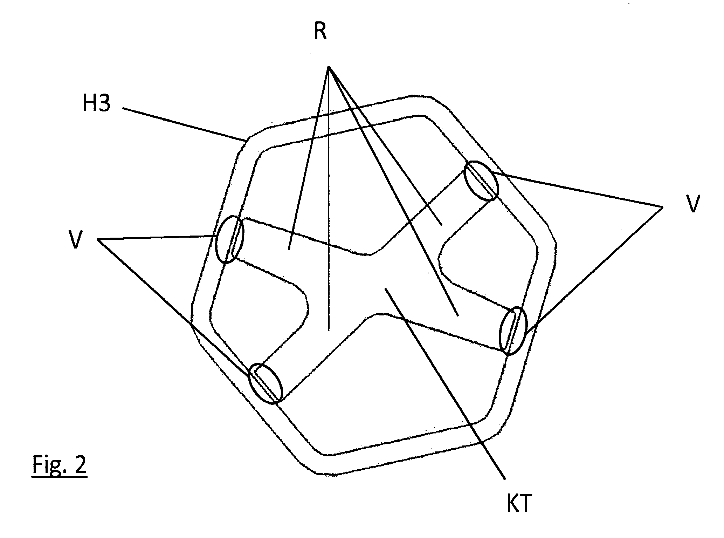

In der Figur 2 ist ein Querschnitt durch das Hohlprofil H3 nebst dem aufgenommenen profilierten Ende des Knotenteils KT wiedergegeben. Der Verlauf des Querschnittes ist in Figur 1 angedeutet.

Das in Form eines X profilierte Ende des Knotenteils KT ist in das Hohlprofil H3 eingesetzt. Die das X bildenden Rippen R des Knotenteils KT sind in Kontakt mit der Innenfläche des Hohlprofils H3. In diesen Kontaktbereichen sind durch Reibrührschweißen erzeugte Verbindungen V zwischen der Wand des Hohlprofils H3 und der an der Innenseite des Hohlprofils H3 anstehenden Rippe R ausgeführt.

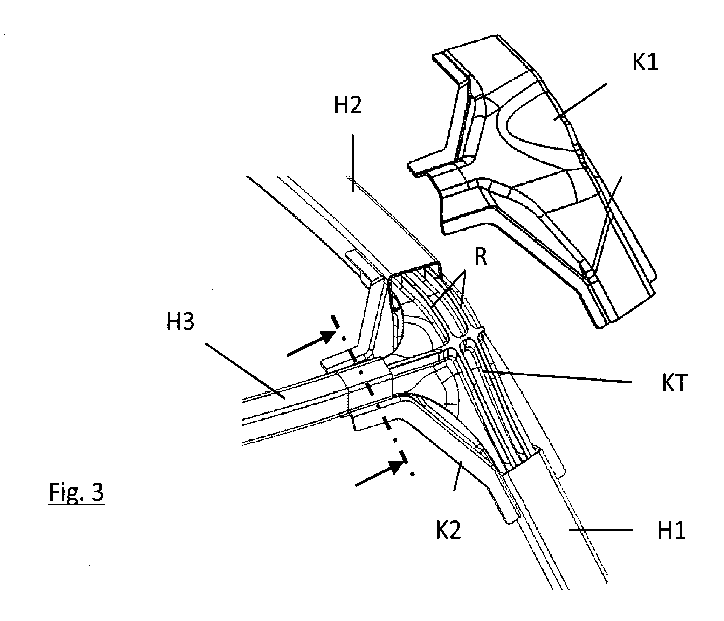

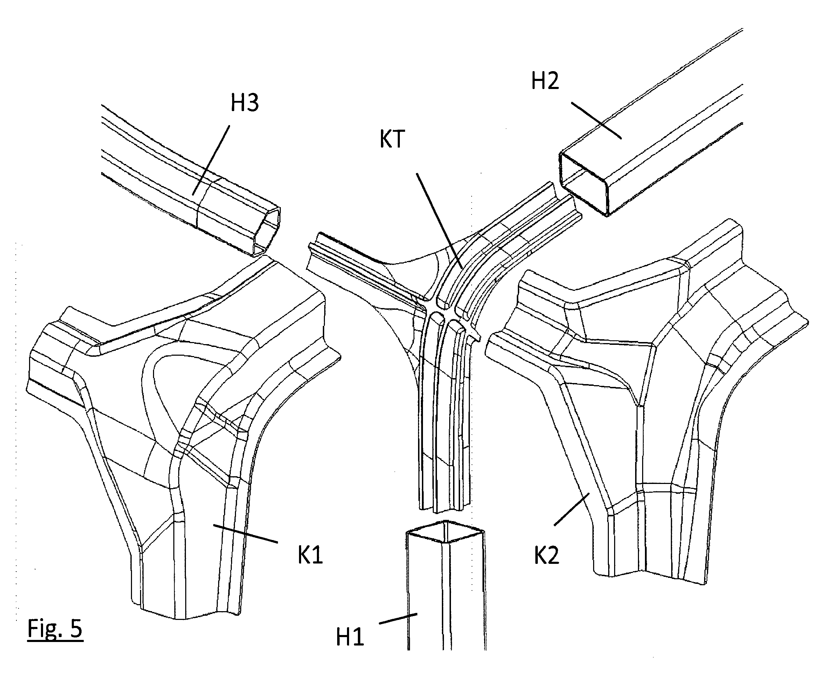

Die Figuren 3 und 5 zeigen eine Ausführung, bei der die Verbindung der Hohlprofile H1, H2, H3 mittels Knotenteil KT sowie zwei nach Art von Halbschalen zusammengesetzten Knotenblechen K1, K2 erfolgt. Die Knotenbleche K1, K2 umfassen im zusammengesetzten Zustand die Hohlprofile H1, H2, H3 in dem Bereich, der durch die profilierten Enden des Knotenteils KT ausgefüllt ist. Die Knotenbleche K1, K2 werden mit den Hohlprofilen H1, H2, H3 und dem Knotenteil KT mittels durch Reibrührschweißen ausgeführten Verbindungen V verbunden, die im Bereich und entlang der Rippen R des Knotenteiles KT verlaufen.

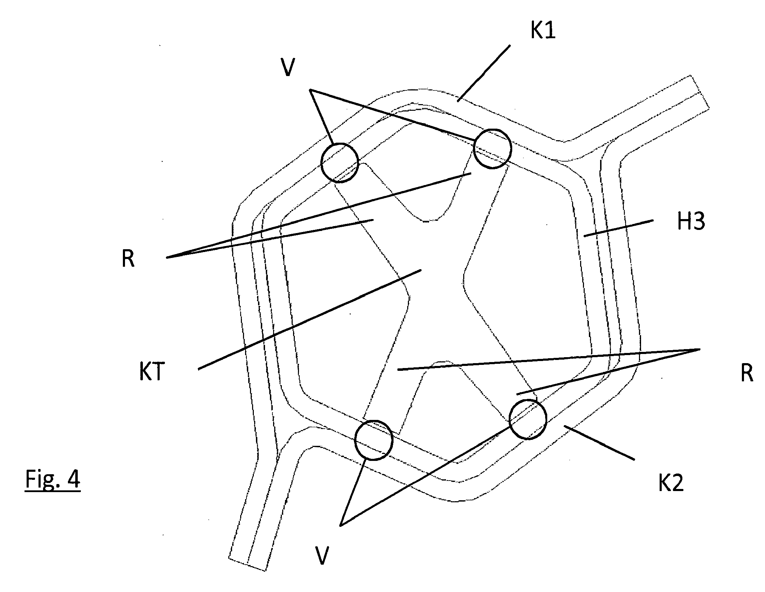

Die Figur 4 zeigt einen Schnitt durch das Hohlprofil H3 mit dem durch die Rippen R profilierte Ende des Knotenteils KT sowie den beiden das Hohlprofil H3 umfassenden Knotenblechen K1, K2. Dieser Schnitt ist in der Figur 3 angegeben. Der Verlauf der durch Reibrührschweißen ausgeführten Verbindungsen V ist in Figur 4 der Orientierung der Rippen R des Knotenteils KT entsprechend dargestellt. Die Rippen R sind so mit dem Hohlprofil H3 sowie den Knotenblechen K1, K2 verbunden. Ferner haben die Rippen R den auf das Hohlprofil H3 ausgeübten Druck während der Ausführung der Reibrührschweißungen aufgenommen.

In Figur 4 ist ferner dargestellt, dass das profilierte Endstück des Knotenteils KT und das Hohlprofil H3 mit den Knotenblechen K1, K2 nicht an allen Außenflanken des hexagonalen Hohlprofils H3 verbunden ist und die Knotenbleche K1, K2 in diesen nicht verbundenen Bereichen einen Abstand zum Hohlprofil H3 aufweisen. Dadurch ergibt sich ein Toleranzausgleich der Bauteile.

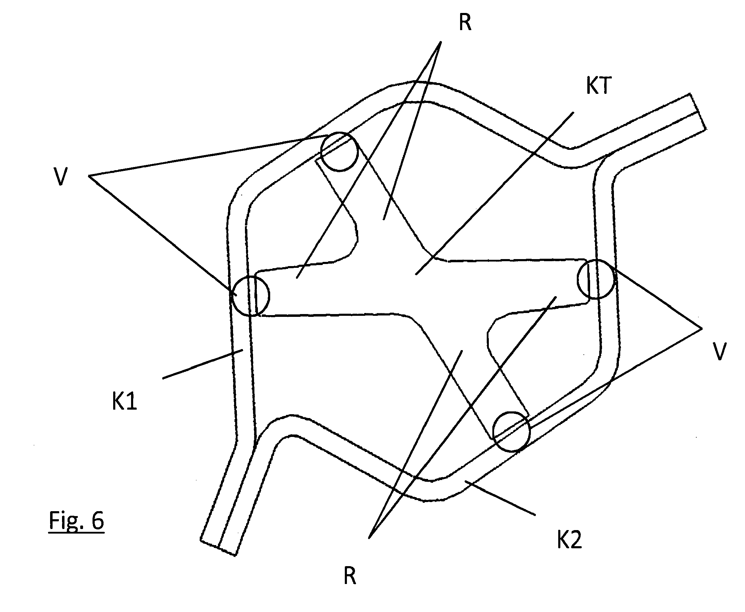

Figur 6 zeigt wie die Knotenbleche K1, K2 auch direkt mit dem Knotenteil KT bzw. dessen Rippen verbunden sein können. Die Verbindungen V fixieren die Knotenbleche K1, K2 in einem Bereich, in dem das Knotenteil KT nicht mehr von dem Hohlprofil H3 umgeben ist. Entsprechend hält das Knotenteil KT über die Rippen R und die mittels Reibrührschweißen ausgeführten Verbindungen V die Knotenbleche K1, K2.

### Bezugszeichenliste

- H1: Hohlprofil
- H2: Hohlprofil
- H3: Hohlprofil
- KT: Knotenteil
- K1: Knotenblech
- K2: Knotenblech
- R: Rippe
- V: Verbindung - Reibrührschweißung

## Patentansprüche

1. Hohlprofilverbindung zur Verbindung von wenigstens zwei Hohlprofilen, bestehend aus einem Knotenteil (KT), dessen Endstücke in die Hohlprofile (H1, H2, H3) eingesteckt werden, **dadurch gekennzeichnet, dass** wobei Knotenteil (KT) und Hohlprofil (H1, H2, H3) durch Reibrührschweißverbindung miteinander verbunden sind, zumindest die den Enden der Hohlprofile (H1, H2, H3) zugeordneten Endstücke des Knotenteils (KT) ein durch Stege, Rippen (R) gebildetes Profil aufweisen, wobei die durch Reibrührschweißen erzeugten Verbindungen (V) zwischen Hohlprofil (H1, H2, H3) und Knotenteil (KT) entlang der Rippen, Stege (R) des Knotenteils (KT) verlaufen.

2. Hohlprofilverbindung nach Anspruch 1,
das Knotenteil (KT) weist zumindest in den Endstücken ein durch Stege, Rippen (R) gebildetes X-, H-, sternförmiges Profil auf.

3. Hohlprofilverbindung nach Anspruch 1 oder 2,
das Knotenteil (KT) ist als ein Gußteil, vorzugsweise aus Aluminium, einer Aluminiumlegierung hergestellt.

4. Hohlprofilverbindung nach Anspruch 1, 2 oder 3,
die Hohlprofile (H1, H2, H3) sind aus Aluminium, einer Aluminiumlegierung gefertigt.

5. Hohlprofilverbindung nach einem der vorhergehenden Ansprüche,
neben dem Knotenteil (KT) ist ein mit den Enden der Hohlprofile (H1, H2, H3) verbundenes Knotenblech (K1, K2) vorgesehen, dessen durch Reibrührschweißen erzeugten Verbindungen (V) entlang der Rippen, Stege (R) des Knotenteils (KT) verlaufen.

6. Hohlprofilverbindung nach Anspruch 5,
die Hohlprofile (H1, H2, H3) werden durch zwei nach Art von Halbschalen zusammengesetzte Knotenbleche (K1, K2) verbunden.

7. Hohlprofilverbindung nach Anspruch 5 oder 6,
das bzw. die Knotenbleche (K1, K2) sind auch außerhalb der Hohlprofile (H1, H2, H3) mit dem Knotenteil ( KT) verbunden.

8. Hohlprofilverbindung nach Anspruch 5,
bei der die Verbindungen (V) entlang der Rippen bzw. Stege (R) des Knotenteils (KT) nur in dem Bereich erfolgt, in dem die Hohlprofile (H1, H2, H3) von Knotenblech (K1, K2) und Knotenteil (KT) überlappt sind.

## Claims

1. Hollow profile connection for connecting at least two hollow profiles, consisting of a gusset part (KT), the end pieces of which are inserted into the hollow profiles (H1, H2, H3), wherein gusset part (KT) and hollow profile (H1, H2, H3) are connected to each other by a friction-stir weld, **characterized in that** at least the end pieces of the gusset part (KT) which are assigned to the ends of the hollow profiles (H1, H2, H3) have a profile formed by webs or ribs (R), wherein the connections (V), which are produced by friction-stir welding, between hollow profile (H1, H2, H3) and gusset part (KT) run along the ribs or webs (R) of the gusset part (KT).

2. Hollow profile connection according to Claim 1,
the gusset part (KT) has, at least in the end pieces, an X-, H- or star-shaped profile formed by webs or ribs (R).

3. Hollow profile connection according to Claim 1 or 2,
the gusset part (KT) is produced as a cast part, preferably consisting of aluminium or an aluminium alloy.

4. Hollow profile connection according to Claim 1, 2 or 3,
the hollow profiles (H1, H2, H3) are manufactured from aluminium or an aluminium alloy.

5. Hollow profile connection according to one of the preceding claims,
in addition to the gusset part (KT) a gusset plate (K1, K2) is provided, which gusset plate is connected to the ends of the hollow profiles (H1, H2, H3) and the connections (V) of which, which are produced by friction-stir welding, run along the ribs or webs (R) of the gusset part (KT).

6. Hollow profile connection according to Claim 5,
the hollow profiles (H1, H2, H3) are connected by two gusset plates (K1, K2) fitted together in the manner of half shells.

7. Hollow profile connection according to Claim 5 or 6,
the gusset plate or the gusset plates (K1, K2) is or are also connected to the gusset part (KT) outside the hollow profiles (H1, H2, H3).

8. Hollow profile connection according to Claim 5,
in which the connections (V) along the ribs or webs (R) of the gusset part (KT) take place only in the region in which the hollow profiles (H1, H2, H3) are overlapped by a gusset plate (K1, K2) and gusset part (KT).

## Revendications

1. Liaison à profil creux pour la liaison d'au moins deux profilés creux, constituée d'une partie de noeud (KT) dont les parties d'extrémité sont enfichées dans les profilés creux (H1, H2, H3), la partie de noeud (KT) et le profil creux (H1, H2, H3) étant connectés l'un à l'autre par une liaison par soudage par friction-malaxage, **caractérisée en ce qu'**au moins les parties d'extrémité de la partie de noeud (KT) associées aux extrémités des profilés creux (H1, H2, H3) présentent un profil formé par des nervures ou des ailettes (R), les liaisons (V) entre le profil creux (H1, H2, H3) et la partie de noeud (KT) produites par soudage par friction-malaxage s'étendant le long des ailettes ou nervures (R) de la partie de noeud (KT).

2. Liaison à profil creux selon la revendication 1,
la partie de noeud (KT) présente au moins dans les parties d'extrémité un profil en forme de X, de H ou d'étoile, formé par des nervures ou des ailettes (R).

3. Liaison à profil creux selon la revendication 1 ou 2,
la partie de noeud (KT) est réalisée sous forme de pièce coulée, de préférence en aluminium ou en alliage d'aluminium.

4. Liaison à profil creux selon la revendication 1, 2 ou 3,
les profilés creux (H1, H2, H3) sont fabriqués en aluminium ou en alliage d'aluminium.

5. Liaison à profil creux selon l'une quelconque des revendications précédentes,
en plus de la partie de noeud (KT), il est prévu une tôle d'assemblage (K1, K2) connectée aux extrémités des profilés creux (H1, H2, H3), dont les liaisons (V) produites par soudage par friction-malaxage s'étendent le long des nervures ou des ailettes (R) de la partie de noeud (KT).

6. Liaison à profil creux selon la revendication 5,
les profilés creux (H1, H2, H3) sont connectés par deux tôles d'assemblage (K1, K2) assemblées à la manière de demi-coques.

7. Liaison à profil creux selon la revendication 5 ou 6,
la ou les tôles d'assemblage (K1, K2) sont aussi connectées à la partie de noeud (KT) à l'extérieur des profilés creux (H1, H2, H3).

8. Liaison à profil creux selon la revendication 5,
dans laquelle les liaisons (V) le long des ailettes ou des nervures (R) de la partie de noeud (KT) ne se produisent que dans la région dans laquelle les profilés creux (H1, H2, H3) sont chevauchés par la tôle d'assemblage (K1, K2) et la partie de noeud (KT).
